# EUROPEAN PATENT SPECIFICATION

(11) **EP 3 586 075 B1**
(45) Date of publication and mention of the grant of the patent: **03.07.2024**
(21) Application number: 18818165.5
(22) Date of filing: 18.05.2018
(51) Int. Cl.: F25D 25/02, F25D 25/00, F25D 29/00

(54) **REFRIGERATOR**
KÜHLSCHRANK
RÉFRIGÉRATEUR

(30) Priority: 14.06.2017 KR 20170074562
(43) Date of publication of application: 01.01.2020
(73) Proprietor: LG Electronics Inc., Seoul 07336 (KR)
(72) Inventor: KIM, Narae, Seoul 08592 (KR); KIM, Sanggyu, Seoul 08592 (KR); JUNG, Hongyoon, Seoul 08592 (KR)
(74) Representative: Vossius & Partner Patentanwälte Rechtsanwälte mbB
(86) International application number: PCT/KR2018/005733
(87) International publication number: WO 2018/230850

(56) References cited:
- EP-A2- 2 418 444
- DE-U1- 29 912 346
- JP-A- 2011 027 275
- KR-A- 20080 076 065
- KR-A- 20110 139 844
- KR-B1- 100 654 804
- KR-B1- 100 664 490
- KR-B1- 100 788 159
- KR-B1- 100 788 159
- KR-B1- 100 878 822
- KR-Y1- 200 159 469
- US-A1- 2011 314 849

## Description

### Technical Field

The present invention relates to a refrigerator, and more particularly, to a refrigerator that may easily acquire information on food respectively stored in a plurality of storage containers received in one storage compartment.

### Background Art

In general, a refrigerator includes a machine compartment below a main body. It is general that the machine compartment is provided below the refrigerator considering center of gravity of the refrigerator, assembly efficiency, and vibration attenuation.

A cooling cycle device is provided in the machine compartment of the refrigerator, and maintains the inside of the refrigerator at a frozen/refrigerating state by using a property of absorbing external heat while changing a liquid refrigerant of a low pressure to a gaseous refrigerant, thereby keeping food in a fresh state. The cooling cycle device of the refrigerator includes a compressor for changing a gaseous refrigerant of low temperature and low pressure to a gaseous refrigerant of high temperature and high pressure, a condenser for changing the gaseous refrigerant of high temperature and high pressure changed by the compressor to a liquid refrigerant of high temperature and high pressure, and an evaporator for absorbing external heat while changing the liquid refrigerant of low temperature and high pressure changed by the condenser to a gaseous refrigerant.

Various types of food may be stored in a storage compartment of the refrigerator. Each food may be kept in a plurality of storage containers individually partitioned. Particularly, if kimchi is kept in a storage container, various studies are ongoing to notify a user of information on kimchi. KR 100 788 159 (B1) relates to a refrigerator food storage status measurement device.

US 2011/03148949 (A1) relates to a refrigerator including a storage container having a sensor device to detect a state of salted food stored in the storage container.

DE 299 12 346 (U1) relates to a freezer with compartments and/or drawers for storing frozen goods. KR 100 878 822 (B1) relates to a kimchi refrigerator that comprises a main body provided with a storage room.

Further related technologies are disclosed in KR 100 878 822 (B1), EP 2 418 444 (A2) and KR 100 654 804 (B1).

### Disclosure of Invention

### Technical Problem

An object of the present invention is to easily provide a user with information related to food kept individually in a plurality of storage containers.

Another object of the present invention is to provide a refrigerator that may reduce the cost of parts used when information on a plurality of storage containers is acquired.

### Solution to Problem

To achieve the objects, a refrigerator according to independent claim 1 is provided.

The bottom surface is greater than the lower surface of the food storage container, and thus the plurality of food storage containers may be mounted on the bottom surface.

The plurality of antenna units may be provided equally to the number of the food storage containers that may be mounted on the bottom surface.

The bottom surface may have an area where four food storage containers may be mounted.

The plurality of antenna units may respectively perform wireless communication with the sensor units adjacent thereto.

The sensor unit may include an NFC tag.

The one reader unit may be connected to the plurality of antenna units by a cable, and the plurality of antenna units may perform communication with the one reader unit through a cable.

The antenna units are arranged below the bottom surface and thus may not be exposed to the storage compartment.

The refrigerator further comprises a heater for providing heat to increase a temperature of the storage compartment.

A ferrite sheet is arranged between the heater and the antenna unit.

The heater may be arranged below the bottom surface of the storage compartment while being extended in a zigzag shape.

The ferrite sheet may be arranged to fully cover an upper side of the heater while forming one plane.

The salinity sensor may be arranged to be partially exposed inside the food storage container.

The refrigerator comprises a display unit for displaying information on the refrigerator.

The display unit is configured to display individual information on salinity sensed by the sensor unit with respect to all the food storage containers.

### Advantageous Effects of Invention

According to the present invention, information on food individually kept in one storage compartment may be provided to a user. Therefore, the user may acquire information on food even though the user does not open food storage containers individually.

Also, according to the present invention, since one reader unit is shared during a procedure of acquiring information transmitted from a plurality of food storage containers, the number of parts may be reduced, whereby the cost for manufacturing a refrigerator may be reduced.

Also, according to the present invention, since radio interference caused by a heater for supplying heat may be blocked even though the heater is provided in the storage compartment, information on food may stably be transmitted and received.

### Brief Description of Drawings

FIG. 1 is a front sectional view illustrating a main part of a refrigerator according to the present invention.
FIG. 2 is a front sectional view illustrating a storage compartment of FIG. 1.
FIG. 3 is a side sectional view illustrating a state that a drawer of FIG. 1 is being inserted into a storage compartment.
FIG. 4 is a side sectional view illustrating a state after a drawer of FIG. 1 is inserted into a storage compartment.
FIG. 5 is a control block diagram of one embodiment.
FIG. 6 is a view illustrating a main part of the present invention.
FIG. 7 is a view illustrating a position of a heater.
FIG. 8 is a view illustrating a screen displayed on a display unit.

### Best Mode for Carrying out the Invention

Reference will now be made in detail to the preferred embodiments of the present invention, examples of which are illustrated in the accompanying drawings.

For clarification and convenience of description, size and shape of each element shown in the drawings may be enlarged or downsized.

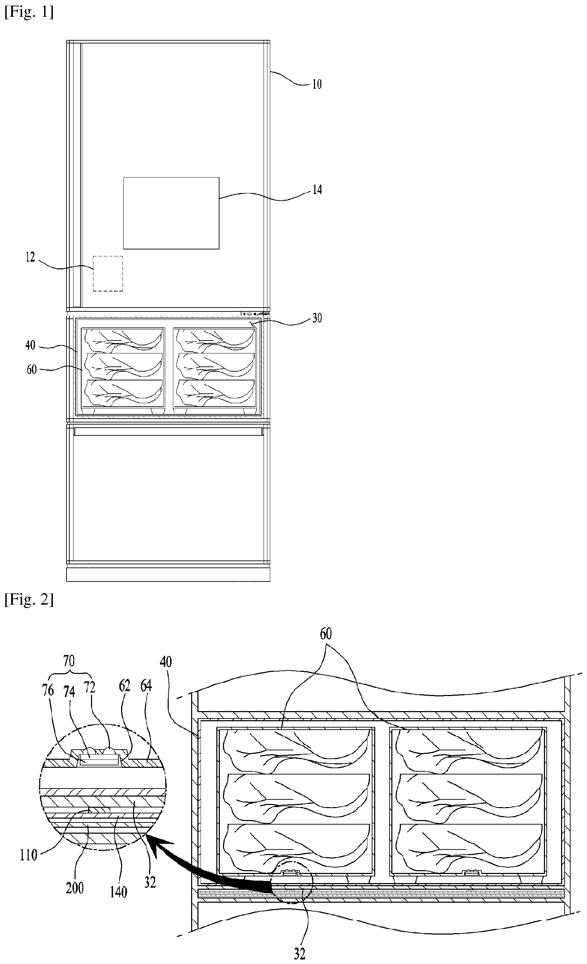

FIG. 1 is a front sectional view illustrating a main part of a refrigerator according to the present invention.

For convenience of description, although the present invention will be described based on a kimchi refrigerator that may store food storage containers for storing kimchi, the present invention may be applied to a general refrigerator. That is, the present invention is not limited to a kimchi refrigerator.

A lid type kimchi refrigerator means that a lid is arranged on the top, and is characterized in that the cooling air is well blocked. A drawer type kimchi refrigerator is used by opening a drawer and is characterized in that a user may arrange food storage containers conveniently and neatly and use upper and side spaces conveniently. Also, a combined type kimchi refrigerator means a kimchi refrigerator that includes a lid on the top and a drawer on the bottom. The present invention may be applied to all of the drawer type kimchi refrigerator, the lid type kimchi refrigerator and the combined type kimchi refrigerator.

It is preferable that the refrigerator includes a cabinet 10 forming external appearance, and a storage compartment 30 in which food is received is included in the cabinet 10. A plurality of storage compartments 30 may be formed in the cabinet 10. In this case, various types of food may be kept in the storage compartments 30 by varying a temperature and a temperature sustain time.

Meanwhile, the refrigerator includes a drawer 40 that may be inserted into or ejected from the storage compartment 30. The drawer 40 is smaller than the storage compartment 30, and is provided with a space in which food storage containers may be kept. Also, a sliding member (not shown) such as wheel is provided on an outer side of the drawer 40 to enable the drawer 40 to be inserted into or ejected from the storage compartment 30 by being slid from the storage compartment 30.

Meanwhile, the drawer 40 is provided with a food storage container 60 in which food is stored individually. The food storage container 60 may have a material such as plastic. Kimchi containing water therein may be kept in the food storage container 60. In this case, the food storage container 60 is tightly sealed such that smell of kimchi and juice of kimchi may not leak out. Also, the food storage container 60 are provided with an opening and a lid, which opens or closes the opening, on the top to take out kimchi kept in the storage container 60.

The food storage container 60 is received in the drawer 40, and a plurality of food storage containers 60 may be received in one drawer 40. In this case, various kinds of kimchi may be kept in one drawer 40.

The refrigerator includes a controller 12 that may control the refrigerator and a display unit 14 that may provide a user with information on the refrigerator in the form of screen.

FIG. 2 is a front sectional view illustrating a storage compartment of FIG. 1.

The storage compartment 30 is provided with a bottom surface 32 forming a lower external appearance of the storage compartment. An upper space of the bottom surface 32 means the inside of the storage compartment 30, into which the cool air may enter and then be cooled. A lower space of the bottom surface 32 means the outside of the storage compartment 30, into which the cool air does not enter. The upper space of the bottom surface 32 and the lower space of the bottom surface 32 are included in an inner space of the cabinet 10.

A plurality of food storage containers 60 which are individually partitioned to allow food to be individually stored therein are arranged in the storage compartment 30. When viewed from a front side, two food storage containers 60 may be received at both sides.

A sensor unit 70 for sensing food, especially information on kimchi is provided on a lower surface 64 of the food storage container 60. The lower surface 64 is provided with a groove 62 provided with an inner space formed while being upwardly protruded, whereby the sensor unit 70 may be provided in the groove 62.

Since the groove 62 provides a space in which the sensor unit 70 may be received, the sensor unit 70 may be prevented from being damaged by colliding with the other part while the food storage container 60 is moving.

The sensor unit 70 includes a salinity sensor 74 that measures salinity inside the food storage container 60.

The salinity sensor 74 may include an electrode unit 72 which is exposed to the inner side of the food storage container 60 and is in contact with food, that is, kimchi. The electrode unit 72 is arranged on the top of the salinity sensor 74. The electrode unit 72 has a pair of electrodes (+pole and -pole) which are in contact with each other by being spaced apart from each other in juice of kimchi kept in the food storage container 60. A power source may be applied to the electrode unit 72 to measure electrical conductivity between both electrodes, and salinity of kimchi may be measured based on the electrical conductivity. For example, if the electrical conductivity is relatively high, salinity of kimchi may have a great value, and if the electrical conductivity is relatively low, salinity of kimchi may have a small value.

Meanwhile, an NFC tag 76 may be installed below the salinity sensor 74. The power source may instantaneously be applied to the salinity sensor 74 through the NFC tag 76, whereby conductivity may be measured by the salinity sensor 74 through the electrode unit 72.

Meanwhile, since there is no means for storing the power, such as battery, in the food storage container 60, accident such as power failure may be avoided, and battery lifespan does not need to be considered.

An antenna unit 110, which may perform wireless communication with each sensor unit 70, is provided below the bottom surface 32 of the storage compartment 30 to correspond to each sensor unit 70.

The antenna unit 110 is arranged below the portion where the sensor unit 70 is located, when the drawer 40 is received in the storage compartment 30.

The antenna unit 110 may receive a signal transmitted from the sensor unit 70 in a wireless communication mode. Also, the antenna unit 110 may operate the NFC tag 76 to allow the salinity sensor 74 to measure salinity. Since the antenna unit 110 and the sensor unit 70 are spaced apart from each other, they may transmit and receive a signal to and from each other in a wireless communication mode.

Since the antenna unit 110 is arranged below the bottom surface 32, the antenna unit 110 is not exposed to the storage compartment 30. Therefore, the user cannot identify the antenna unit 110 when the drawer 40 is inserted into or ejected from the storage compartment 30.

That is, although an empty space may exist between the antenna unit 110 and the sensor unit 70, the bottom surface 32 of the storage compartment 30 is arranged between the antenna unit 110 and the sensor unit 70.

A ferrite sheet 140 and a heater 200 are sequentially arranged below the antenna unit 110. A space exists between the ferrite sheet 140 and the heater 200.

The heater 200 supplies heat t the storage compartment 30. If kimchi is kept in the storage compartment 30, an operation for ripening kimchi may be performed. In this case, heat generated from the heater 200 may be supplied to the storage compartment 30 to increase a temperature of the storage compartment 30.

The heater 200 may be made of a metal material. Interference on wireless communication performed between the antenna unit 110 and the sensor unit 70 may be generated by the heater 200, whereby communication failure may occur. Power supply and data transmission and reception may be performed in the sensor unit 70 and the antenna unit 110 through wireless communication using NFC. In this case, peripheral conductor (metal) may aggravate loss by changing magnetic resonance frequency of a coil, and may generate communication failure by lowering inductance of a coil.

To prevent this communication failure from occurring, in this embodiment, the ferrite sheet 140 is arranged below the antenna unit 110. The ferrite sheet 140 is made of ferrite oxide based ceramics, and NiZn based ferrite or MnZn based ferrite may be used as the ferrite sheet 140. Communication failure may be generated by various metal structures arranged in the cabinet 10 in addition to the heater 200. Since the ferrite sheet 140 is arranged below the antenna unit 110, communication failure may be reduced.

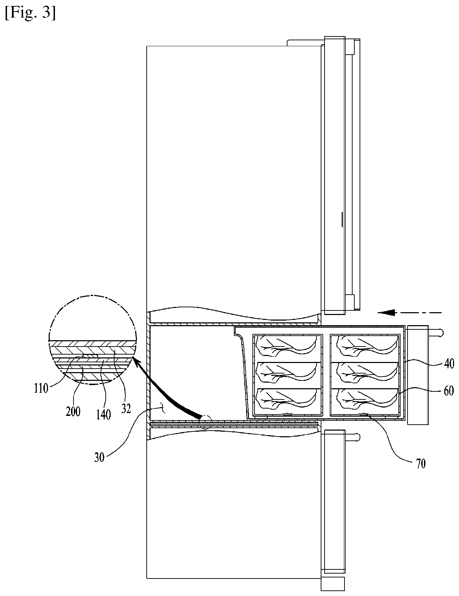

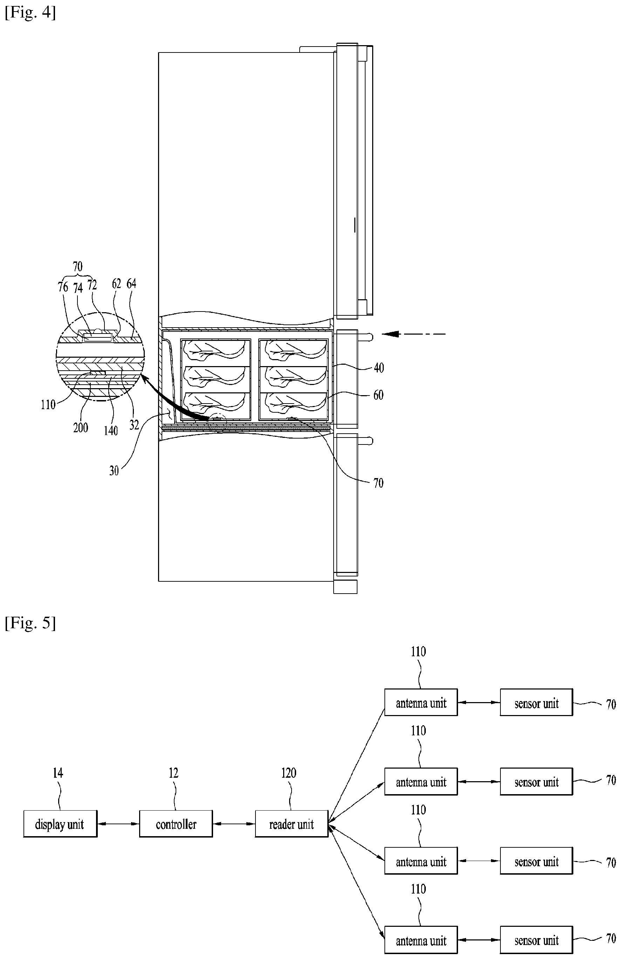

FIG. 3 is a side sectional view illustrating a state that a drawer of FIG. 1 is being inserted into a storage compartment, and FIG. 4 is a side sectional view illustrating a state after a drawer of FIG. 1 is inserted into a storage compartment.

The user may put the food storage container 60 into the drawer 40 in a state that the drawer 40 is ejected as shown in FIG. 3 and then insert the drawer 40 into the storage compartment 40 as shown in FIG. 4

Two food storage containers 60 may be arranged in the drawer 40 in a direction that the drawer 40 is ejected or inserted.

Since the sensor unit 70 is arranged above the antenna unit 110 after the drawer 40 is sufficiently inserted into the storage compartment 30 as shown in FIG. 4, a distance between the sensor unit 70 and the antenna unit 110 becomes short, whereby wireless communication may be performed.

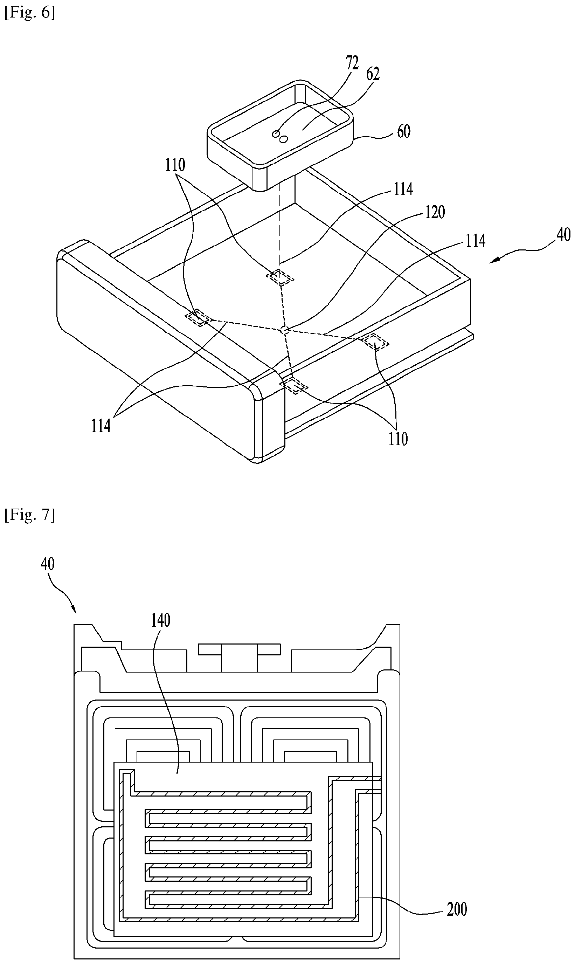

FIG. 5 is a control block diagram of one embodiment, and FIG. 6 is a view illustrating a main part of the present invention. The antenna unit 110 is shown in FIG. 6 on the assumption that the drawer 40 is inserted into the storage compartment 30.

As shown in FIG. 5, it is preferable that the number of the antennas 110 is the same as the number of the sensor units 70 arranged on the bottom surface 32. Each antenna unit 110 performs power supply and data transmission and reception with each sensor unit 70 in a wireless communication mode. The antenna units 110 correspond to the sensor units 70 one to one, whereby one antenna unit 110 performs wireless communication with one sensor unit 70. The plurality of antenna units 110 are connected to one reader unit 120 through a wire 114 in a cable mode. The reader unit 120 may receive a signal from the plurality of antenna units 110 and then transfer the signal to the controller 12.

Only one reader unit 120 is provided, and is connected to all of the antennas 110, whereby the reader unit 120 sequentially receives the signals transferred from the respective antennas 110. The reader unit 120 may individually be connected to each antenna unit 110 through an individual wire 114.

The reader unit 120 may perform communication with the plurality of antenna units 110 through the wire 113 in a cable mode.

The reader unit 120 may include a circuit unit that controls data processing. The antenna units 110 may be driven sequentially, whereby the sensor units 70 corresponding to the antenna units 110 may be driven sequentially. The antenna units 110 may be driven clockwise or counterclockwise.

The bottom of the drawer 40 may have the substantially same area as that of the bottom surface 32 of the storage compartment 30. The plurality of food storage containers 60 may be mounted on the drawer 40, wherein four food storage containers 60 may be received in the drawer 40. Therefore, four food storage containers 60 are equally arranged on the bottom surface 32 of the storage compartment 30. The food storage containers 60 is arranged in such a manner that two food storage containers are arranged in a left and right direction and two other food storage containers are arranged in a forward and backward direction.

That is, the bottom surface 32 of the storage compartment 30 may have an area where four food storage containers 60 may be arranged.

FIG. 7 is a view illustrating a position of a heater.

The heater 200 is arranged to be extended from the lower portion of the storage compartment 30 in a zigzag shape. That is, the heater 200 may be arranged at various positions below the storage compartment 30 to uniformly heat the inside of the storage compartment 30. That is, the heater 200 may be arranged below the storage compartment 30 while being extended in a forward and backward direction and extended in a left and right direction.

The ferrite sheet 140 is arranged to fully cover the upper side to which the heater 200 is extended, while forming one plane. That is, the ferrite sheet 140 is arranged between the heater 200 and the drawer 40, and is arranged below the drawer 40 to cover the heater 200 such that the heater 200 is not exposed directly.

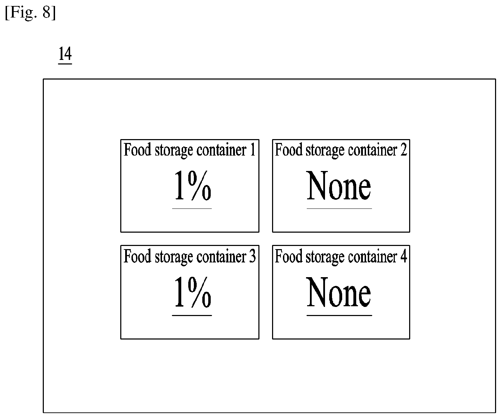

FIG. 8 is a view illustrating a screen displayed on a display unit.

Salinity of each food storage container may be displayed on the display unit 14 as shown in FIG. 8. Each kimchi is received in the food storage container 60, whereby the user may calculate a storage period of kimchi through salinity if salinity of kimchi is measured.

In one embodiment, the storage compartment may include a first storage compartment provided at the uppermost side, a second storage compartment provided below the first storage compartment, and a third storage compartment provided below the second storage compartment. Since the storage compartment is divided into three areas, various kinds of food may be kept separately from one another.

Meanwhile, the food storage container may be received in the second storage compartment. If kimchi is kept in the food storage container, kimchi contains water and thus is relatively thicker than the other food. The user may most conveniently insert or eject the food storage container into or from the second storage compartment, which corresponds to a middle height as compared with the first storage compartment which is the highest and the third storage compartment which is the lowest.

Meanwhile, the drawer moves together with a door which opens or closes the second storage compartment. One drawer is provided, and the plurality of food storage containers are received in one drawer. If the drawer is fully received in the second storage compartment, the sensor unit may be arranged above the antenna unit, whereby the antenna unit and the sensor unit may transmit and receive a signal to and from each other.

It will be apparent to those skilled in the art that the present invention may be embodied in other specific forms without departing from the scope of the invention as defined by the appended claims.

## Claims

1. A refrigerator comprising:
a cabinet (10) having a storage compartment (30) provided with a bottom surface (32);
a drawer (40) configured to be inserted into or ejected from the storage compartment (30);
a plurality of food storage containers (60) received in the storage compartment (30) and mounted at an upper side of the bottom surface (32);
a plurality of sensor units (70), wherein each sensor unit (70) is respectively installed on lower surfaces (64) of the plurality of food storage containers (60);
a plurality of antenna units (110) provided on the bottom surface (32) of the storage compartment (30) to respectively correspond to each sensor unit (70);
a heater (200) for providing heat to increase a temperature of the storage compartment (30);
one reader unit (120) to which signals transmitted from the plurality of antenna units (110) are transferred, and
a display unit (14) for displaying information on the refrigerator and configured to display individual information on salinity sensed by the sensor unit (70) with respect to all the food storage containers (60),
wherein the bottom surface (32) partitions a lower external appearance of the storage compartment (30), and the sensor unit (70) includes a salinity sensor (74) for measuring salinity inside the food storage container (60) and transmitting the measured salinity to the antenna units (110), and
wherein the food storage containers (60) are arranged in such a manner that two food storage containers are arranged in a left and right direction and two other food storage containers are arranged in a forward and backward direction,
wherein the antenna units (110) are arranged below the bottom surface (32) and thus are not exposed to the storage compartment (30),
wherein a ferrite sheet (140) is arranged between the heater (200) and the antenna unit (110), wherein the ferrite sheet and the heater are sequentially arranged below the antenna unit, and
wherein a space exists between the ferrite sheet (140) and the heater (200).

2. The refrigerator according to claim 1, wherein the bottom surface (32) is greater than the lower surface (64) of the food storage container (60), and thus the plurality of food storage containers (60) may be mounted on the bottom surface (32).

3. The refrigerator according to claim 2, wherein the plurality of antenna units (110) are provided equally to the number of the food storage containers (60) that may be mounted on the bottom surface (32).

4. The refrigerator according to claim 2, wherein the bottom surface (32) has an area where four food storage containers (60) may be mounted.

5. The refrigerator according to claim 1, wherein the plurality of antenna units (110) is respectively configured to perform wireless communication with the sensor units (70) adj acent thereto.

6. The refrigerator according to claim 5, wherein each sensor unit (70) includes an NFC tag (76).

7. The refrigerator according to claim 1, wherein the one reader unit (120) is connected to the plurality of antenna units (110) by a cable, and the plurality of antenna units (110) is configured to perform communication with the one reader unit (120) through the cable.

8. The refrigerator according to claim 1, wherein the heater (200) is arranged below the bottom surface (32) of the storage compartment (30) while being extended in a zigzag shape.

9. The refrigerator according to claim 8, wherein the ferrite sheet (140) is arranged to fully cover an upper side of the heater (200) while forming one plane.

10. The refrigerator according to claim 1, wherein the salinity sensor (74) is arranged to be partially exposed inside the food storage container (60).

## Patentansprüche

1. Kühlschrank, der aufweist:
ein Gehäuse (10) mit einem Aufbewahrungsfach (30), das mit einer Bodenfläche (32) versehen ist;
eine Schublade (40), die konfiguriert ist, in das Aufbewahrungsfach (30) eingesetzt oder daraus herausgezogen zu werden;
mehrere Lebensmittelaufbewahrungsbehälter (60), die im Aufbewahrungsfach (30) aufgenommen und an einer Oberseite der Bodenfläche (32) angebracht sind;
mehrere Sensoreinheiten (70), wobei jede Sensoreinheit (70) jeweils an unteren Oberflächen (64) der mehreren Lebensmittelaufbewahrungsbehältern (60) installiert ist;
mehrere Antenneneinheiten (110), die auf der Bodenfläche (32) des Aufbewahrungsfachs (30) vorgesehen sind, so dass sie jeweils jeder Sensoreinheit (70) entsprechen;
eine Heizung (200) zur Bereitstellung von Wärme, um eine Temperatur des Aufbewahrungsfachs (30) zu erhöhen;
eine Leseeinheit (120), an die von den mehreren Antenneneinheiten (110) gesendete Signale übertragen werden, und
eine Anzeigeeinheit (14) zum Anzeigen von Informationen über den Kühlschrank, die konfiguriert ist, individuelle Informationen über den Salzgehalt anzuzeigen, der von der Sensoreinheit (70) in Bezug auf alle Lebensmittelaufbewahrungsbehälter (60) erfasst wird,
wobei die Bodenfläche (32) eine untere äußere Erscheinung des Lagerfachs (30) unterteilt und die Sensoreinheit (70) einen Salzgehaltssensor (74) zum Messen des Salzgehalts innerhalb des Lebensmittelaufbewahrungsbehälters (60) und zum Übertragen des gemessenen Salzgehalts an die Antenneneinheiten (110) umfasst, und
wobei die Lebensmittelaufbewahrungsbehälter (60) so angeordnet sind, dass zwei Lebensmittelaufbewahrungsbehälter in einer linken und rechten Richtung und zwei andere Lebensmittelaufbewahrungsbehälter in einer Vorwärts- und Rückwärtsrichtung angeordnet sind,
wobei die Antenneneinheiten (110) unter der Bodenfläche (32) angeordnet sind und somit zum Aufbewahrungsfach (30) nicht freiliegen,
wobei ein Ferritblech (140) zwischen der Heizung (200) und der Antenneneinheit (110) angeordnet ist, wobei das Ferritblech und die Heizung aufeinanderfolgend unter der Antenneneinheit angeordnet sind, und
wobei zwischen dem Ferritblech (140) und der Heizung (200) ein Zwischenraum besteht.

2. Kühlschrank nach Anspruch 1, wobei die Bodenfläche (32) größer ist als die untere Oberfläche (64) des Lebensmittelaufbewahrungsbehälters (60), so dass die mehreren Lebensmittelaufbewahrungsbehälter (60) auf der Bodenfläche (32) angebracht werden können.

3. Kühlschrank nach Anspruch 2, wobei die Anzahl der Antenneneinheiten (110) gleich der Anzahl der Lebensmittelaufbewahrungsbehälter (60) ist, die auf der Bodenfläche (32) angebracht werden können.

4. Kühlschrank nach Anspruch 2, wobei die Bodenfläche (32) einen Bereich aufweist, in dem vier Lebensmittelaufbewahrungsbehälter (60) angebracht werden können.

5. Kühlschrank nach Anspruch 1, wobei die mehreren Antenneneinheiten (110) jeweils konfiguriert sind, eine drahtlose Kommunikation mit den dazu benachbarten Sensoreinheiten (70) durchzuführen.

6. Kühlschrank nach Anspruch 5, wobei jede Sensoreinheit (70) einen NFC-Tag (76) enthält.

7. Kühlschrank nach Anspruch 1, wobei die eine Leseeinheit (120) mit den mehreren Antenneneinheiten (110) über ein Kabel verbunden ist und die mehreren Antenneneinheiten (110) konfiguriert sind, eine Kommunikation mit der einen Leseeinheit (120) über das Kabel durchzuführen.

8. Kühlschrank nach Anspruch 1, wobei die Heizung (200) unter der Bodenfläche (32) des Aufbewahrungsfachs (30) angeordnet ist, während sie sich zickzackförmig erstreckt.

9. Kühlschrank nach Anspruch 8, wobei die Ferritplatte (140) so angeordnet ist, dass sie eine Oberseite des Heizelements (200) vollständig bedeckt, während sie eine Ebene bildet.

10. Kühlschrank nach Anspruch 1, wobei der Salzgehaltssensor (74) so angeordnet ist, dass er teilweise im Inneren des Lebensmittelaufbewahrungsbehälters (60) freiliegt.

## Revendications

1. Réfrigérateur, comprenant :
une carrosserie (10) comportant un compartiment de stockage (30) présentant une surface inférieure (32) ;
un tiroir (40) prévu pour être inséré dans le compartiment de stockage (30) ou retiré de celui-ci ;
une pluralité de bacs de stockage d'aliments (60) reçus dans le compartiment de stockage (30) et montés sur un côté supérieur de la surface inférieure (32) ;
une pluralité d'unités de capteur (70), chaque unité de capteur (70) étant installée sur des surfaces inférieures (64) respectives de la pluralité de bacs de stockage d'aliments (60) ;
une pluralité d'unités d'antenne (110) prévues sur la surface inférieure (32) du compartiment de stockage (30) de manière à correspondre à chaque unité de capteur (70) respective ;
un élément chauffant (200) pour fournir de la chaleur afin d'élever la température du compartiment de stockage (30) ;
une unité de lecture (120) à laquelle les signaux transmis par la pluralité d'unités d'antenne (110) sont transférés, et
une unité d'affichage (14) pour afficher des informations sur le réfrigérateur, et prévue pour afficher des informations individuelles sur la salinité détectée par l'unité de capteur (70) pour tous les bacs de stockage d'aliments (60),
où la surface inférieure (32) divise une apparence externe inférieure du compartiment de stockage (30), et l'unité de capteur (70) comprend un capteur de salinité (74) pour mesurer la salinité à l'intérieur du bac de stockage d'aliments (60) et transmettre la salinité mesurée aux unités d'antenne (110), et
où les bacs de stockage d'aliments (60) sont disposés de sorte que deux bacs de stockage d'aliments sont disposés dans la direction de la gauche vers la droite et deux autres bacs de stockage d'aliments sont disposés dans la direction de l'avant vers l'arrière,
où les unités d'antenne (110) sont disposées sous la surface inférieure (32) et ne sont donc pas exposées au compartiment de stockage (30),
où une feuille de ferrite (140) est disposée entre l'élément chauffant (200) et l'unité d'antenne (110), ladite feuille de ferrite et l'élément chauffant étant disposés séquentiellement sous l'unité d'antenne, et
où un espace est présenté entre la feuille de ferrite (140) et l'élément chauffant (200).

2. Réfrigérateur selon la revendication 1, où la surface inférieure (32) est plus grande que la surface inférieure (64) du bac de stockage d'aliments (60), la pluralité de bacs de stockage d'aliments (60) pouvant ainsi être montée sur la surface inférieure (32).

3. Réfrigérateur selon la revendication 2, où la pluralité d'unités d'antenne (110) est présentée en nombre égal à celui des bacs de stockage d'aliments (60) pouvant être montés sur la surface inférieure (32).

4. Réfrigérateur selon la revendication 2, où la surface inférieure (32) présente une superficie où quatre bacs de stockage d'aliments (60) peuvent être montés.

5. Réfrigérateur selon la revendication 1, où la pluralité d'unités d'antenne (110) est prévue pour effectuer une communication sans fil avec les unités de capteur (70) respectives qui leur sont adjacentes.

6. Réfrigérateur selon la revendication 5, où chaque unité de capteur (70) comprend une étiquette NFC (76).

7. Réfrigérateur selon la revendication 1, où l'unité de lecture (120) est reliée à la pluralité d'unités d'antenne (110) par un câble, et la pluralité d'unités d'antenne (110) est prévue pour effectuer une communication avec l'unité de lecture (120) par l'intermédiaire du câble.

8. Réfrigérateur selon la revendication 1, où l'élément chauffant (200) est disposé sous la surface inférieure (32) du compartiment de stockage (30) avec une extension en zigzag.

9. Réfrigérateur selon la revendication 8, où la feuille de ferrite (140) est disposée de manière à recouvrir entièrement une face supérieure de l'élément chauffant (200) en formant un seul plan.

10. Réfrigérateur selon la revendication 1, où le capteur de salinité (74) est prévu de manière à être partiellement exposé à l'intérieur du bac de stockage d'aliments (60).
